# EUROPÄISCHE PATENTSCHRIFT

(11) **EP 1 193 964 B1**
(45) Veröffentlichungstag und Bekanntmachung des Hinweises auf die Patenterteilung: **06.04.2005**
(21) Anmeldenummer: 01119170.7
(22) Anmeldetag: 08.08.2001
(51) Int. Cl.: H04N 1/00, H04L 29/06

(54) **Verfahren zum Transport von Facsimile Information in IP basierten Datennetzen**
Method for transmission of facsimile information in an IP based network
Méthode pour la transmission d'information facsimile sur un réseau basé en IP

(30) Priorität: 26.09.2000 DE 10047651
(43) Veröffentlichungstag der Anmeldung: 03.04.2002
(73) Patentinhaber: SIEMENS AKTIENGESELLSCHAFT, 80333 München (DE)
(72) Erfinder: Hünlich, Klaus, 85467 Neuching (DE)

(56) Entgegenhaltungen:
- EP-A- 0 836 315
- WO-A-98/34399
- TEBBS R G: "REAL-TIME IP FACSIMILE: PROTOCOL AND GATEWAY REQUIREMENTS" BELL LABS TECHNICAL JOURNAL, WILEY, CA, US, Bd. 4, Nr. 2, April 1999 (1999-04), Seiten 128-145, XP000851514 ISSN: 1089-7089

## Beschreibung

Die Erfindung bezieht sich auf ein Verfahren zum Übertragen von Daten, insbesondere Faksimiledaten, wenigstens eines ersten Teilnehmers an wenigstens einen weiteren Teilnehmer mit Echtzeitanforderung der Teilnehmer an die Übermittlungsstrecke.

Derartige Verfahren finden beispielsweise Anwendung bei der Übermittlung von Faksimiledaten bzw. -information. Hierbei werden von einem Faxgerät üblicherweise über eine Telefonverbindung, welche über eine Vermittlungseinheit zu einem anderen Teilnehmer hergestellt wird, Daten an das Faxgerät des anderen Teilnehmers übermittelt und nach korrektem Empfang dieser Daten von der Gegenseite quittiert. Da die Verbindung im Form einer hergestellten Telefonverbindung zwischen zwei Teilnehmern, insbesondere bei großen Entfernungen relativ kostenintensiv ist, wird für derartige Verbindungen zunehmend das vergleichsweise kostengünstige Internet genutzt.

Problematisch ist hierbei, dass bestimmte Teilnehmer, wie beispielsweise ein Faxgerät, eine direkte Übertragung in Echtzeit fordert und diese Echtzeitanforderung von dem auf TCP/IP basierten Netz nicht gesichert erfüllt wird. Nachteiligerweise entstehen deshalb bei Faxübertragungen über das Internet eine hohe Zahl an Übertragungsfehlern, die zu einer zusätzlichen Belastung des Netzes führen. Beides steht einer echten kommerziellen Nutzung entgegen.

Aus dem Artikel "Real-Time IP Facsimile: Protocol and Gateway Requirements" von R. G. Tebbs im "Bell Labs Technical Journal", Wiley, datiert vom April 1999, Seiten 128-145, sind verschiedene Implementierungen von IP-basierten Faxdiensten, nämlich ein Echtzeit-IP-Faxdienst sowie ein auf dem so genannten store-and-forward-Prinzip basierender IP-Faxdienst bekannt. Dabei ist als Nachteil des auf dem store-and-forward-Prinzip basierenden IP-Faxdienstes angegeben, dass eine Quittung über einen erfolgreichen Empfang eines Faxes durch das empfangende Faxgerät nur mittels einer zusätzlich aufzubauenden Telefonverbindung zum sendenden Faxgerät zurück übermittelt werden könne. Aus diesem Grund wird ein Echtzeit-IP-Faxdienst empfohlen, bei dem eine solche Ende-zu-Ende-Quittung keine besonderen Maßnahmen und insbesondere keine zusätzlichen Verbindungen erfordere. Um ein IP-Netz an die Echtzeitanforderungen eines solchen Echtzeit-IP-Faxdienstes anzupassen, werden in dem oben genannten Artikel verschiedene Maßnahmen vorgeschlagen. In vielen praxisrelevanten Fällen können die erhöhten Echtzeitanforderungen an ein Faxdaten transportierendes IP-Netz jedoch - wie oben bereits erwähnt - nur teilweise erfüllt werden.

Der vorliegenden Erfindung liegt deshalb die Aufgabe zugrunde, ein Verfahren zum Übertragen und Quittieren von Faksimiledaten wenigstens eines ersten Teilnehmers an wenigstens einen weiteren Teilnehmer zu schaffen, das die Echtzeitanforderung der Teilnehmer an die Übermittlungsstrecke erfüllt, wobei zumindest Teilbereiche der Übermittlungsstrecke in Form einer nicht echtzeitfähigen Verbindung realisiert sind. Weiterhin liegt der vorliegenden Erfindung die Aufgabe zugrunde, eine Zwischenstation zur Durchführung eines solchen Verfahrens zu schaffen.

Diese Aufgabe wird erfindungsgemäß durch ein Verfahren mit den Merkmalen des Anspruchs 1 sowie eine Zwischenstation mit den Merkmalen des Anspruchs 3 gelöst.

Durch den Aufbau einer Echtzeitverbindung zwischen dem jeweiligen Teilnehmer und der jeweiligen Zwischenstation wird dem jeweiligen Teilnehmer ein Echtzeitverbindungspartner allerdings in Form einer Zwischenstation statt eines anderen Teilnehmers zur Verfügung gestellt, so dass vorhandene derartige Anforderungen aufweisende Endgeräte, wie beispielsweise Faxgeräte, mit ihrer jeweiligen Zwischenstation entsprechend der Anforderung in Echtzeit direkt und sicher kommunizieren können.

Im Weiteren kann die gesamte Verbindungsstrecke zwischen zwei Teilnehmern in eine oder mehrere weitere Teilstrecken zerlegt sein, die diesen Anforderungen nicht genügen muss, um beispielsweise ein Netz, das sich in den Schichten 2 und 1 auf ein Übertragungsverfahren stützt, welches Echtzeitbedingungen nur in sehr groben Rahmen erfüllen kann (zum Beispiel Ethernet).

Eine derartige Verbindung muss auch nicht notwendigerweise bidirektionaler Natur sein, da selbst eine gesicherte Übertragung, beispielsweise bei einer Aufteilung der Sendeinformation in mehrere Datenblöcke in eine Richtung, durch eine Übertragung der mittels Redundanz-Check ermittelten korrekten bzw. inkorrekten (Empfangs-)Quittung in anderer Richtung zwischen den Blöcken und/oder am Ender der gesamten Übertragung, also jeweils unidirektional, möglich ist.

Es wird eine Quittung des wenigstens einen weiteren Teilnehmers über die gesamte Übermittlungsstrecke an den wenigstens einen ersten Teilnehmer zurückgesandt, so dass dieser von einer korrekten bzw. inkorrekten (Gesamt-)Übertragung Kenntnis erhält und entsprechende Aktionen, wie Anzeige des korrekten bzw. inkorrekten Ergebnisses mit eventuellem nochmaligen Übermittlungsversuch, veranlasst.

Diese Quittung wird als vom ersten Teilnehmer erwartete Quittung an diesen übermittelt. Eine üblicherweise vorgesehene (erste) Quittung zwischen Teilnehmer und Zwischenstation entfällt. Es ist auch denkbar, durch geringfügige Änderung an einem Endteilnehmer einen möglicherweise längeren vorbestimmbaren Zeitraum für das Warten auf die endgültige Quittung zu zulassen.

In bevorzugter Ausgestaltung der Erfindung wird das Verfahren auf eine Übermittlungsstrecke angewandt, die zumindest in Teilbereichen als TCP/IP basiertes Netzwerk, beispielsweise das Internet, Intranet usw. realisiert ist. Die hierbei oft verwendeten lokalen Netzzugänge können als spezielle Proxies ausgebildet sein, die eine übliche Internetverbindung zwischen wenigstens zwei Proxies ermöglichen und in Richtung des Endteilnehmers eine Echtzeitverbindung darstellen, so dass beispielsweise für ein Faxgerät dieser Proxy als Fax Proxy, also als Faxgegengerät agiert.

Selbstverständlich kann dieses Verfahren, sowie eine derartige Zwischenstation für beliebige Teilnehmer mit Echtzeitanforderungen verwendet werden und hierbei zumindest Teilbereiche der Übermittlungsstrecke mit nicht echtzeitfähigen kostengünstigen Verbindungen realisiert werden.

Weitere vorteilhafte Ausgestaltungen der Erfindung ergeben sich aus den Unteransprüchen.

Die Erfindung wird nachfolgend anhand der in der Zeichnung dargestellten Ausführungsbeispiele näher erläutert. In der Zeichnung zeigen:
- Fig. 1: eine schematische Darstellung eines verteilten Vermittlungssystems und Realisierung einer Übermittlungsstrecke nach der Erfindung und
- Fig. 2: eine schematische Darstellung der zeitlichen Abfolge der Übertragung der Daten zwischen den einzelnen Stationen.

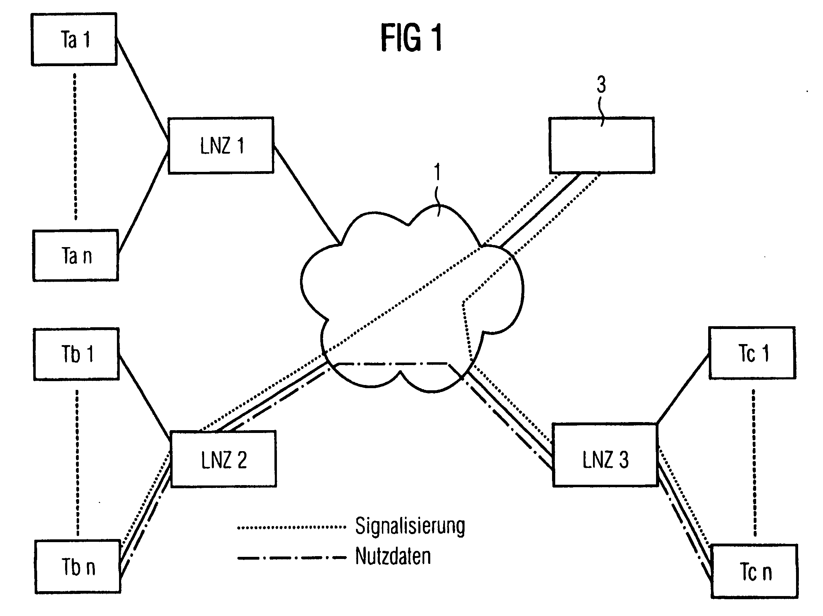

Das in Fig. 1 dargestellte verteilte Vermittlungssystem weist ein TCP/IP-basiertes Netz 1, wie beispielsweise das Internet auf, über das ein oder mehrere beliebige Teilnehmer Ta 1 bis Ta n, Tb 1 bis Tb n, Tc 1 bis Tb n miteinander paarweise oder in größeren Gruppen bzw. Konferenzen miteinander kommunizieren können. Hierzu sind mehrere Teilnehmer, wie beispielsweise eine Gruppe, ein Intranet, ein lokales Netz usw. über einen lokalen Netzzugang LNZ 1 bis LNZ 3 mit dem Internet 1 verbunden, wobei eine Verbindung eines Teilnehmerpaares, wie beispielsweise in Fig. 1 als Strichpunktlinie dargestellt, Tb n zu Tc n über die entsprechenden lokalen Netzzugänge LNZ 2 und LNZ 3 sowie das Internet und mittels einer hierfür zuständigen Vermittlungseinheit bzw. Vermittlungslogik 3 hergestellt wird.

Hierbei wird zuerst über eine Signalisierung (in Fig. 1 als Punktlinie dargestellt) mittels einer Vermittlungseinheit 3 die Verbindung aufgebaut und dann über die so hergestellte Verbindung die Datenübertragung vorgenommen. Selbstverständlich sind die in Fig. 1 dargestellten lokalen Netzzugänge LNZ 1 bis LNZ 3 nur beispielhaft, so dass eine beliebige Anzahl von Teilnehmern über eine beliebige Anzahl von lokalen Netzzugängen auf diese Weise über das Netz 1 mittels der Vermittlungslogik 3 verbunden werden und Daten austauschen können. Die Vermittlungslogik kann auch physikalischer Bestandteil eines LNZ sein.

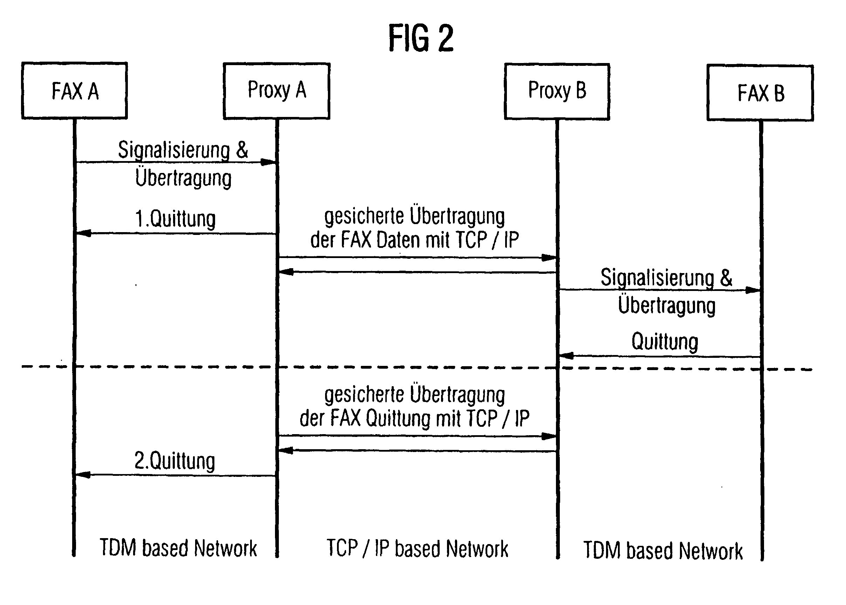

Die Datenübertragung und deren zeitliche Abfolge nach dem erfindungsgemäßen Verfahren ist in Fig. 2 anhand des Beispiels einer Faksimileübertragung zwischen dem Faxgerät eines Teilnehmers A Fax A und dem Faxgerät eines Teilnehmers B Fax B dargestellt. Hierbei erfolgt erfindungsgemäß zuerst eine direkte Übertragung in Echtzeit zwischen dem Faxgerät des Teilnehmers A (Fax mit Sendedaten) Fax A und dem entsprechend ausgestaltetem lokalen Netzzugang in Form eines FaxProxys Proxy A.

Wie bei einer typischen Faxübertragung kann hier zuerst die Signalisierung der Sendebereitschaft bzw. Empfangsbereitschaft, nachfolgend die Übertragung der Faxinformation von Faxgerät des Teilnehmers A Fax A zu FaxProxy Proxy A erfolgen. Nach erfolgter Übertragung wird das Empfangs- bzw. Übertragungsergebnis anhand einer in der übertragenen Information enthaltenen redundanten Information in FaxProxy Proxy A überprüft und als erste Quittung abschließend von FaxProxy Proxy A an das Faxgerät des Teilnehmers A Fax A zurückgesendet.

Zwischen dem FaxProxy Proxy A und FaxProxy Proxy B erfolgt im Weiteren eine Datenübertragung der in FaxProxy Proxy A, beispielsweise in einem Zwischenspeicher, vorhandenen Sendeinformation, wobei für diese Datenübertragung ein sehr einfaches Netz mit kostengünstigen Verbindungen (beispielsweise ein Übermittlungsprotokoll das sich auf Schicht 1 oder 2 stützt) ausreicht. Eine vorzugsweise gesicherte Übertragung kann hierbei durch ein Quittieren (Zwischenquittung und/oder Endquittung) des korrekten Empfangs der (Teil-)Information bzw. der gesamten Information in FaxProxy Proxy B, beispielsweise mittels Überprüfung einer in der Übertragung enthaltenen redundanten Information, und Rücksendung dieser Quittung an FaxProxy Proxy A, erfolgen. Da diese Quittung nicht gleichzeitig mit der Sendeinformation übertragen werden muss, reicht hierfür selbst eine unidirektionale Strecke aus.

Die auf diesen Weg in FaxProxy Proxy B erhaltene Information wird nach Signalisierung des Faxgerätes des Teilnehmers A Fax A und entsprechenden Verbindungsaufbau an diesen übertragen, wobei ein herkömmliches Faxgerät nach korrektem Empfang diesen quittiert. Da das Faxgerät des Teilnehmers A Fax A bereits von FaxProxy Proxy A eine Quittung in Form einer ersten Quittung erhalten hat, ist dieses Quittieren nach dem ersten Ausführungsbeispiel jedoch nicht zwingend, da das Faxgerät des Teilnehmer A diese Quittung des Faxteilnehmers B nicht empfängt bzw. nicht an diesen weiterübermittelt wird.

Nach diesem ersten Ausführungsbeispiel (obere Hälfte der gestrichelten Linie, in Fig. 2) wird zwischen einem Faxgerät des Teilnehmers A Fax A und dem Faxgerät eines Teilnehmers B Fax B eine Verbindung mit einem entsprechenden FaxProxy Proxy A, Proxy B aufgebaut, wobei der entsprechende FaxProxy Proxy A, Proxy B von dem jeweiligen Faxgerät Fax A, Fax B als Faxgegengerät bzw. Gegenstelle interpretiert wird. Von der weiteren Übermittlungsstrecke zwischen einem FaxProxy Proxy A und FaxProxy Proxy B oder auch mehreren Proxies bemerken die Endgeräte der Teilnehmer Fax A Fax B in diesem Fall nichts.

Obwohl nach dieser ersten Ausführungsform der Erfindung keine abschliessende Quittung des Empfangs der Information beim anderen Endgerät Fax B an das sendende Endgerät Fax A zurück übermittelt wird, kann auf diese Weise eine hohe Zuverlässigkeit gewährleistet werden, da sowohl die Übertragungsstrecke zwischen den Proxies, also im Internet 1, als auch die Strecke des anderen FaxProxy Proxy B und dem empfangenen Faxgerät des Teilnehmers B Fax B bei Verwendung von Protokollen wie beispielsweise FCP von hoher Zuverlässigkeit sind. Ein blockweises Zerstückeln und wiederholtes Senden fehlerhafter Blöcke, wie beispielsweise im Internet 1 mittels TCP/IP und hierdurch längerer Übertragungszeit fällt bei den geringen Verbindungskosten nicht nachteilig ins Gewicht.

Für bestimmte Anwendungen, die aus beispielsweise rechtlichen, wirtschaftlichen, sicherheitsrelevanten oder anderen Gründen eine definitive Bestätigung des Empfangs der Information in der Gegenstelle Fax B erfordern, kann eine solche Quittung gemäß einem zweiten Ausführungsbeispiel (Fig. 2, unterhalb der gestrichelten Linie) zurück übertragen werden. Hierbei wird nach Empfang der gesendeten Faxinformation diese vom Faxgerät des Teilnehmers B Fax B quittiert und die Quittung an FaxProxy Proxy B rückübertragen.

Die in FaxProxy Proxy B empfangene Quittung wird, in umgekehrter Weise wie vorher die Sendeinformation, von FaxProxy Proxy B an FaxProxy Proxy A mit evtl. weiteren Zwischenstationen (weitere Fax Proxies) übertragen, wobei auch diese Übertragung mittels Bestätigung des Empfangs gesichert erfolgen kann. Die in FaxProxy Proxy A empfangene Quittung kann, wie dargestellt, als zweite Quittung in der Echtzeitübermittlungsstrecke an das Faxgerät des Teilnehmers A Fax A gesendet werden. Selbstverständlich ist es denkbar, dass nach entsprechender Modifikation am Faxgerät des Teilnehmer A Fax A dieses keine erste Quittung innerhalb einer bestimmten Zeit erwartet, so dass diese erste Quittung entfallen kann.

Vorteilhafter Weise ist es nach dem erfindungsgemäßen Übertragungsverfahren möglich, Faxgeräte mit verschiedenen Faxprotokollen empfangen bzw. senden zu lassen, da eine direkte Kopplung der Faxgeräte nach dem erfindungsgemäßen Verfahren nicht erfolgt. Demzufolge ist es beispielsweise möglich, dass das Faxgerät des Teilnehmers A Fax A ein Gruppe-3-Faxprotokoll verwendet, dagegen das Faxgerät des Teilnehmers B Fax B Gruppe 2. Voraussetzung hierfür, dass ein Proxy zumindest die Protokolle, welche ein damit über die Echtzeitermittlungsstrecke verbundenes Faxgerät verwendet beherrscht, wobei vorteilhafter Weise zum Anschluss von beliebigen Faxgeräten jeder FaxProxy Proxy A, Proxy B alle Faxprotokolle beherrschen sollte.

Obwohl das erfindungsgemäße Verfahren anhand einer Übermittlungsstrecke zwischen zwei Faxgeräten Fax A, Fax B erläutert wurde, ist dieses Verfahren selbstverständlich für beliebige Geräte anwendbar, die eine Datenübertragung in Echzeit erfordern bzw. eine Datenübertragung an ein anderes Gerät und den Empfang dieser Daten als Quittung innerhalb einer bestimmten Zeit erwarten, anwendbar.

Als besonderes kostengünstiges Netz, welches diesen Anforderungen in der Regel nicht oder nur schwer und unter hohen technischen Aufwand genügt, bietet sich derzeit insbesondere das Internet an, wobei auch andere Netze, Stromnetz zur Datenübertragung usw. in Frage kommen, die gegenüber bestehenden Netzen mit Echzeitanforderungen durch ein Fehlen solcher Anforderungen vergleichsweise kostengünstig sind.

## Patentansprüche

1. Verfahren zum Übertragen von Faksimiledaten von einem ersten Teilnehmer (Fax A) an wenigstens einen weiteren Teilnehmer (Fax B) mit Echtzeitanforderung der Teilnehmer (Fax A, Fax B) an die Übermittlungsstrecke, wobei
a) der erste Teilnehmer (Fax A) zu einer als Fax-Proxy a-gierenden Zwischenstation (Proxy A) eine Echtzeitverbindung aufbaut und Faksimiledaten an diese übermittelt, wobei eine bei einer Faxübertragung üblicherweise vorgesehene, einen Empfang der Faksimiledaten durch die erste Zwischenstation (Proxy A) bestätigende, erste Quittung entfällt,
b) die erste Zwischenstation (Proxy A) diese Faksimiledaten an eine weitere als Fax-Proxy agierende Zwischenstation (Proxy B) über eine zumindest in Teilbereichen nicht echtzeitfähige Verbindung weitergibt,
c) zwischen dem weiteren Teilnehmer (Fax B) und der weiteren Zwischenstation (Proxy B) eine Echtzeitverbindung aufgebaut wird und die Faksimiledaten an den weiteren Teilnehmer übermittelt werden,
d) dass der Empfang der Faksimiledaten von dem weiteren Teilnehmer (Fax B) an die weitere Zwischenstation (Proxy B) quittiert wird,
e) die empfangene Quittung an die erste Zwischenstation (Proxy A) übertragen wird und
f) von dieser, als vom ersten Teilnehmer (Fax A) erwartete Quittung, an den ersten Teilnehmer (Fax A) übermittelt wird.

2. Verfahren nach Anspruch 1,
**dadurch gekennzeichnet,**
**dass** die erste Zwischenstation (Proy A) diese Daten an eine weitere Zwischenstation (Proxy B) über ein zumindest in Teilbereichen TCP/IP-basiertes Netzwerk (1) weitergibt.

3. Zwischenstation (Proxy A) zur Durchführung des Verfahrens nach einem der vorhergehenden Ansprüche, die
a) als Fax-Proxy ausgebildet ist und für einen Teilnehmer (Fax A) einen Echtzeitverbindungspartner darstellt,
b) eine bei einer Faxübertragung üblicherweise vorgesehene erste Quittung über einen erfolgten Empfang von Faksimiledaten vom Teilnehmer (Fax A) entfallen lässt,
c) mit einer weiteren Zwischenstation (Proxy B) über eine zumindest in Teilbereichen nicht echtzeitfähige Übermittlungsstrecke verbindbar ist,
d) derart ausgestaltet ist, dass eine von der weiteren Zwischenstation (Proxy B) empfangene Quittung als vom Teilnehmer (Fax A) erwartete Quittung an den Teilnehmer (Fax A) übermittelt wird.

4. Zwischenstation nach Anspruch 3,
**dadurch gekennzeichnet,**
**dass** die Übermittlungsstrecke als Verbindung eines TCP/IP-basierten Netzwerkes (1) realisiert ist.

## Claims

1. Method of transmitting facsimile data, from a first subscriber (Fax A) to at least one further subscriber (Fax B), with the subscribers (Fax A, Fax B) having a requirement for a real-time communication link, where
a)the first subscriber (Fax A) establishes a real-time connection to an intermediate station acting as a fax proxy (Proxy A) and transmits facsimile data to said station, there being no first acknowledgement (normally provided for a fax transmission) confirming receipt of the facsimile data by the first intermediate station (Proxy A),
b)the first intermediate station (Proxy A) forwards said facsimile data to a further intermediate station acting as a fax proxy (Proxy B) over a connection which at least in parts does not support real-time transmission,
c)a real-time connection is established between the further subscriber (Fax B) and further intermediate station (Proxy B) and the facsimile data is transmitted to the further subscriber,
d)reception of the facsimile data from the further subscriber (Fax B) is acknowledged to the further intermediate station (Proxy B),
e)the received acknowledgement is transmitted to the first intermediate station (Proxy A) and f)is transmitted to the first subscriber (Fax A) therefrom as acknowledgement expected by the first subscriber (Fax A).

2. Method according to Claim 1, **characterized in that** the first intermediate station (Proxy A) forwards said data to a further intermediate station (Proxy B) over a network (1) at least in parts based on TCP/IP.

3. Intermediate station (Proxy A) for performing the method as claimed in one of the preceding claims, which
a) is in the form of a fax proxy and represents a real-time connection partner for a subscriber (Fax A),
b)allows a first acknowledgement (normally provided for a fax transmission) about the fact that facsimile data has been received by the subscriber (Fax A) to be dispensed with,
c)can be connected to a further intermediate station (Proxy B) via a communication link that at least in parts does not support real-time transmission,
d)is designed such that an acknowledgement received by the further intermediate station (Proxy B) is transmitted to the subscriber (Fax A) as acknowledgement expected by the subscriber (Fax A).

4. Intermediate station as claimed in Claim 3, **characterized in that** the communication link is realized as a connection of a TCP/IP-based network (1).

## Revendications

1. Procédé pour la transmission de données facsimilé d'un premier abonné (Fax A) à au moins un autre abonné (Fax B) avec une demande en temps réel des abonnés (Fax A, Fax B) au trajet de transmission,
a) le premier abonné (Fax A) établissant une liaison en temps réel vers une station intermédiaire (Proxy A) agissant comme Fax-Proxy et transmettant des données facsimilé à celle-ci,
un premier accusé de réception, généralement prévu lors d'une transmission par télécopieur et confirmant une réception des données facsimilé par la première station intermédiaire (Proxy A), étant supprimé,
b) la première station intermédiaire (Proxy A) transférant ces données facsimilé à une autre station intermédiaire (Proxy B) agissant comme Fax-Proxy, par l'intermédiaire d'une liaison non apte au temps réel, tout du moins dans des zones partielles,
c) une liaison en temps réel étant établie entre l'autre abonné (Fax B) et l'autre station intermédiaire (Proxy B) et les données facsimilé étant transmises aux autres abonnés,
d) la réception des données facsimilé par l'autre abonné (Fax B) étant acquittée à l'autre station intermédiaire (Proxy B),
e) l'accusé de réception reçu étant transmis à la première station intermédiaire (Proxy A) et
f) étant transmis au premier abonné (Fax A) par celle-ci en tant qu'accusé de réception attendu du premier abonné (Fax A).

2. Procédé selon la revendication 1,
**caractérisé en ce**
**que** la première station intermédiaire (Proxy A) transmet ces données à une autre station intermédiaire (Proxy B) par l'intermédiaire d'un réseau basé sur TCP/IP (1) au moins dans des zones partielles.

3. Station intermédiaire (Proxy A) pour la réalisation du procédé selon l'une des revendications précédentes, qui
a) est exécutée comme Fax-Proxy et représente un partenaire de liaison en temps réel pour un abonné (Fax A),
b) cause la suppression d'un premier accusé de réception, généralement prévu lors d'une transmission par télécopieur, concernant la réception réalisée de données facsimilé par l'abonné (Fax A),
c) est connectable à une autre station intermédiaire (Proxy B) par l'intermédiaire d'un trajet de transmission non apte au temps réel, tout du moins dans des zones partielles,
d) est exécutée de telle manière qu'un accusé de réception reçu par l'autre station intermédiaire (Proxy B) est transmis à l'abonné (Fax A) en tant qu'accusé de réception attendu par l'abonné (Fax A).

4. Station intermédiaire selon la revendication 3,
**caractérisé en ce**
**que** le trajet de transmission est réalisé comme liaison d'un réseau basé sur TCP/IP (1).
